# EUROPEAN PATENT APPLICATION

(11) **EP 4 755 571 A2**
(43) Date of publication of application: **10.06.2026**
(21) Application number: 26175223.2
(22) Date of filing: 17.03.2022
(51) Int. Cl.: B23K 103/12

(54) **LASER PROCESSING HEAD AND LASER PROCESSING SYSTEM**

(30) Priority: 02.04.2021 JP 2021063548
(62) Divisional of application: 22780149.5
(71) Applicant: Panasonic Intellectual Property Management Co., Ltd., Kadoma-shi, Osaka 571-0057 (JP)
(72) Inventor: OGUCHI, Hisayuki, Osaka (JP); TAKAHASHI, Wataru, Osaka (JP)
(74) Representative: Novagraaf International SA

(57) **Abstract**

Laser processing head (10) includes a bend mirror that bends a second laser beam in a direction intersecting a first laser beam; a dichroic mirror that transmits most of the first laser beam toward a workpiece (W) and reflects most of the second laser beam toward the workpiece; a workpiece-side condensing lens that condenses each laser beam to irradiate the workpiece with each laser beam; an image sensor that receives a rest of the first laser beam reflected by the dichroic mirror and a rest of the second laser beam transmitted through the dichroic mirror; a detection-side condensing lens that condenses each laser beam to irradiate the image sensor with the condensed laser beam; and an adjuster that adjusts a workpiece-side condensing state on an image plane on a workpiece side. The image sensor detects a detection-side condensing state on an image plane on an image sensor side. The workpiece-side condensing state is adjusted by the adjuster based on the detection-side condensing state.

## Description

### TECHNICAL FIELD

The present disclosure relates to a laser processing head and a laser processing system.

### BACKGROUND ART

A laser processing system performs laser processing such as cutting, welding, and drilling of a workpiece. In the laser processing system, a laser processing head irradiates a workpiece with a laser beam emitted from a laser oscillator and guided through an optical fiber. The laser processing head is provided with a condensing optical system for condensing the laser beam and irradiating the workpiece with the laser beam.

For example, a laser processing machine (laser processing head) according to PTL 1 includes a collimator lens that collimates a laser beam emitted from a laser oscillator and emitted from an optical fiber, and a condensing lens that condenses and irradiates a workpiece with the collimated laser beam. The collimator lens and the condensing lens are provided to be movable in an optical axis direction. Between the collimator lens and the condensing lens, there is provided a bend mirror that deflects an optical axis of the laser beam corrected to a parallel light flux by the collimator lens at a right angle. The collimator lens and the condensing lens are moved in the optical axis direction, and thus, a condensing diameter in the condensing lens can be converted.

### Citation List

### Patent Literature

PTL 1: Unexamined Japanese Patent Publication No. 2009-226473

### SUMMARY OF THE INVENTION

### Technical problem

In recent years, a hybrid laser processing system using two types of laser beams having different wavelengths, such as near-infrared light and blue light, for example, has been known. The hybrid laser processing system combines two types of laser beams having different wavelengths on an identical optical axis by a laser processing head, condenses the combined two types of laser beams, and irradiates a workpiece with the condensed laser beams. The hybrid laser processing system can utilize strengths of two kinds of laser beams and complement limitations of the laser beams, and thus has more advantages than a conventional laser processing system using only one type of laser beam.

In such a hybrid laser processing system, it is necessary to detect a condensing state such as a condensing position and a spot diameter of each laser beam with which the workpiece is irradiated and finely adjust each condensing state to a desired state. For example, the condensing positions of the laser beams are detected, and the condensing positions are caused to coincide with each other or deviate at predetermined intervals. In addition, for example, the spot diameters of the laser beams are detected, and each spot diameter expands and contracts to a predetermined size.

In the hybrid laser processing system of the related art, since it is difficult to detect the condensing state of each laser beam with which the workpiece is irradiated in real time during the laser processing, it is necessary to interrupt the laser processing once in order to adjust each condensing state, and it is troublesome.

The present disclosure has been made in view of such various points, and an object of the present disclosure is to detect and adjust a condensing state of each laser beam with which a workpiece is irradiated in real time in hybrid laser processing.

### Solution to problem

A laser processing head according to the present disclosure is a laser processing head that combines a first laser beam and a second laser beam different from each other to irradiate a workpiece with the combined laser beam. The laser processing head includes a bend mirror that bends the second laser beam in a direction intersecting the first laser beam, a dichroic mirror that transmits most of the first laser beam toward the workpiece and reflects most of the second laser beam toward the workpiece, a workpiece-side condensing lens that condenses each of the first laser beam and the second laser beam to irradiate the workpiece with the condensed laser beams between the dichroic mirror and the workpiece, a photodetector that receives each of a rest of the first laser beam reflected by the dichroic mirror and a rest of the second laser beam transmitted through the dichroic mirror, a detection-side condensing lens that condenses each of the first laser beam and the second laser beam to irradiate the photodetector with the condensed laser beam between the dichroic mirror and the photodetector, and an adjuster that adjusts a workpiece-side condensing state that is a condensing state of at least one of the first laser beam and the second laser beam on an image plane on a workpiece side. The photodetector detects a detection-side condensing state corresponding to the workpiece-side condensing state, the detection-side condensing state being a condensing state of at least one of the first laser beam and the second laser beam on an image plane on a photodetector side, and the workpiece-side condensing state is adjusted by the adjuster based on the detection-side condensing state.

A laser processing system according to the present disclosure includes the laser processing head, a first laser oscillator that emits the first laser beam, a second laser oscillator that emits the second laser beam, a first optical fiber that transfers the first laser beam from the first laser oscillator to the laser processing head, and a second optical fiber that transfers the second laser beam from the second laser oscillator to the laser processing head.

### Advantageous effect of invention

According to the present disclosure, it is possible to detect and adjust the condensing state of each laser beam with which the workpiece is irradiated in real time in hybrid laser processing.

### BRIEF DESCRIPTION OF THE DRAWINGS

Fig. 1 schematically illustrates a laser processing system according to an exemplary embodiment of the present disclosure.
Fig. 2 is a schematic configuration diagram schematically illustrating an internal structure of a laser processing head, and illustrates a case where a condensing position of a first laser beam and a condensing position of a second laser beam coincide with each other.
Fig. 3 illustrates a condensing state of each laser beam on an image plane on a workpiece side as viewed in a direction of an arrow III in Fig. 2.
Fig. 4 is a diagram illustrating a condensing state of each laser beam on an image plane on an image sensor side as viewed in a direction of an arrow IV in Fig. 2.
Fig. 5 is a diagram corresponding to Fig. 2 schematically illustrating the internal structure of the laser processing head, and illustrates a case where the condensing position of the first laser beam and the condensing position of the second laser beam deviate from each other.
Fig. 6 is a diagram corresponding to Fig. 3, and illustrates the condensing state of each laser beam on the image plane on the workpiece side as viewed in a direction of an arrow VI in Fig. 5.
Fig. 7 is a diagram corresponding to Fig. 4, and illustrates the condensing state of each laser beam on the image plane on the image sensor side as viewed in a direction of arrow VII in Fig. 2.
Fig. 8 is a diagram corresponding to Fig. 2 schematically illustrating the internal structure of the laser processing head, and illustrates a case where the second laser beam is defocused.
Fig. 9 is a diagram corresponding to Fig. 3, and illustrates the condensing state of each laser beam on the image plane on the workpiece side as viewed in a direction of an arrow IX in Fig. 8.
Fig. 10 is a diagram corresponding to Fig. 4, and illustrates the condensing state of each laser beam on the image plane on the image sensor side as viewed in a direction of an arrow X in Fig. 8.

### DESCRIPTION OF EMBODIMENT

Hereinafter, exemplary embodiments of the present disclosure will be described in detail with reference to the drawings. The following description of preferable exemplary embodiments is merely illustrative in nature and is not intended to limit the present disclosure, application thereof, or use thereof.

### (Laser processing system)

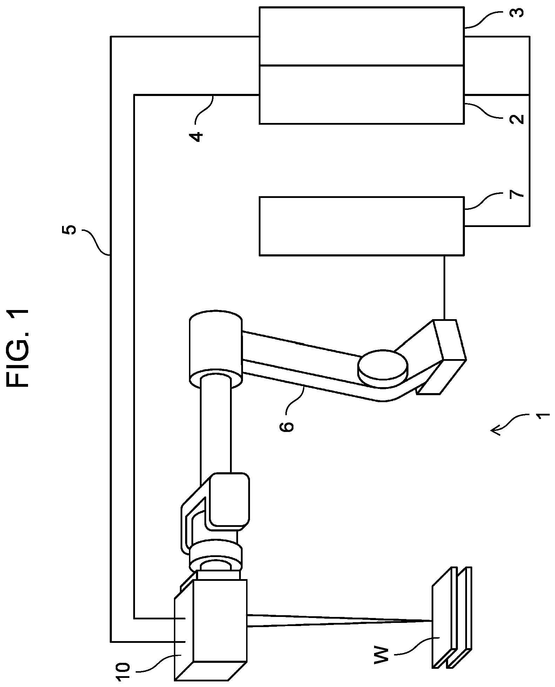

Fig. 1 illustrates laser processing system (laser processing apparatus) 1 according to the present exemplary embodiment. Laser processing system 1 is a hybrid laser processing system using two types of laser beams having different wavelengths, and performs laser processing such as cutting, welding, and drilling of workpiece W.

Laser processing system 1 includes laser processing head (laser irradiation head) 10, first laser oscillator 2 and second laser oscillator 3, first optical fiber 4, second optical fiber 5, manipulator 6, and control device 7.

First laser oscillator 2 emits (oscillates) first laser beam A. Second laser oscillator 3 emits (oscillates) second laser beam B. First laser beam A and second laser beam B have different wavelengths. First laser beam A is near-infrared light having a wavelength ranging from about 900 nm to 1200 nm inclusive. Second laser beam B is near-infrared light having a wavelength ranging from about 400 nm to 450 nm inclusive. In general, near-infrared light is applied to laser processing, but in recent years, blue light is also being applied to laser processing because of its good absorption rate to copper.

First optical fiber 4 transmits first laser beam A from first laser oscillator 2 to laser processing head 10. Second optical fiber 5 transmits second laser beam B from second laser oscillator 3 to laser processing head 10.

Laser processing head 10 combines first laser beam A and second laser beam B on an identical optical axis, and irradiates front surface W1 of workpiece W with each of combined first laser beam A and second laser beam B. Details of laser processing head 10 will be described later.

Laser processing head 10 is attached to a distal end of manipulator 6, and laser processing head 10 is moved. Control device 7 controls operation of manipulator 6 and oscillation of laser beams A and B by laser oscillators 2 and 3. Control device 7 may control operation of an actuator to be described later inside laser processing head 10.

### (Laser processing head)

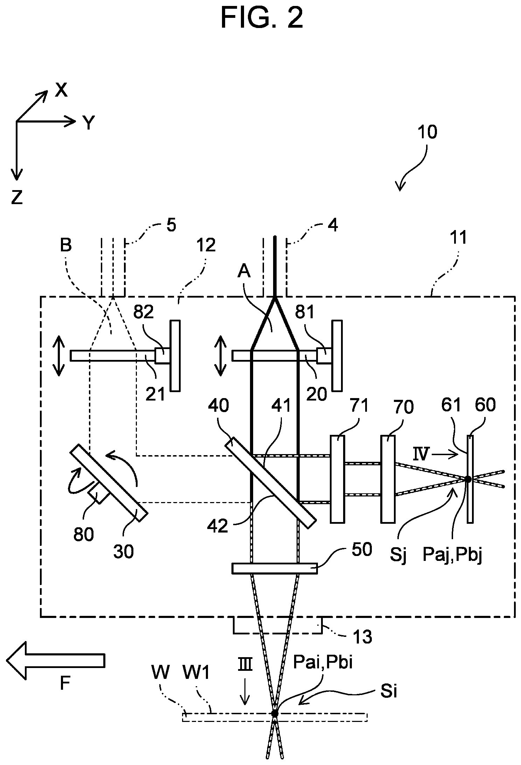

Fig. 2 illustrates an internal structure of laser processing head 10. Note that X, Y, and Z in Fig. 2 indicate directions in an orthogonal coordinate system, X and Y are horizontal directions of front, rear, left, and right, and Z is an up-down direction (vertical direction). In addition, a direction in which an optical axis (virtual ray as representative of light flux in each of laser beams A and B) of each of laser beams A and B extends is referred to as an "optical axis direction". The optical axis direction is not always constant in the orthogonal coordinate systems X, Y, and Z, and may change in accordance with traveling of each of laser beams A and B.

Laser processing head 10 condenses first laser beam A and second laser beam B by a condensing optical system provided inside housing 11, and irradiates workpiece W with first laser beam A and second laser beam B. Laser processing head 10 includes, as the condensing optical system, first collimator lens 20, second collimator lens 21, bend mirror 30, dichroic mirror 40, workpiece-side condensing lens 50, image sensor 60 as a photodetector, detection-side condensing lens 70, aperture 71, mirror-side actuator 80 as a part of an adjuster, first lens-side actuator 81 as a part of an adjuster, and second lens-side actuator 82 as a part of an adjuster.

First laser beam A from first optical fiber 4 and second laser beam B from second optical fiber 5 are incident on incident portion 12 in housing 11 in a Z direction in parallel with each other. In incident portion 12, first laser beam A and second laser beam B travel straight in the Z direction in parallel with each other.

First collimator lens 20 collimates (makes) first laser beam A (into parallel light). Second collimator lens 21 collimates (makes) second laser beam B (into parallel light). Each of laser beams A and B becomes substantially parallel light by each of collimator lenses 20 and 21.

Bend mirror 30 bends the optical axis of second laser beam B parallel to the optical axis of first laser beam A in a direction intersecting the optical axis of first laser beam A, specifically, in a direction orthogonal to the optical axis of first laser beam A (Y direction).

Dichroic mirror 40 is a mirror that transmits most of light in a specific wavelength region and reflects most of light in the other wavelength regions. In the present exemplary embodiment, dichroic mirror 40 transmits most of first laser beam A incident from rear surface 41 substantially straight toward front surface 42, and reflects most of second laser beam B incident from front surface 42 substantially at a right angle toward front surface 42. On the other hand, dichroic mirror 40 reflects the rest of first laser beam A incident from rear surface 41 substantially at the right angle toward rear surface 41, and transmits the rest of second laser beam B incident from front surface 42 substantially straight toward rear surface 41.

On an optical axis direction traveling side of most of first laser beam A transmitted through dichroic mirror 40 and most of second laser beam B reflected by dichroic mirror 40, workpiece W is disposed via irradiation portion (irradiation port) 13 of laser processing head 10. That is, dichroic mirror 40 transmits most of first laser beam A toward workpiece W and reflects most of second laser beam B toward workpiece W.

Most of each of laser beams A and B is, for example, about 95% to 99.9% of each of laser beams A and B before being incident on dichroic mirror 40 in terms of energy. The rest of each of laser beams A and B is, for example, about 0.1% to 5% of each of laser beams A and B before being incident on dichroic mirror 40 in terms of energy.

Workpiece-side condensing lens 50 is disposed between dichroic mirror 40 and workpiece W in the optical axis direction. Workpiece-side condensing lens 50 condenses each of first laser beam A and second laser beam B. Workpiece-side condensing lens 50 irradiates front surface W1 of workpiece W with each of condensed first laser beam A and second laser beam B via irradiation portion 13. Workpiece-side condensing lens 50 may have a chromatic aberration correction function. The optical axis direction of each of laser beams A and B emitted by workpiece-side condensing lens 50 substantially coincides with the Z direction.

Image sensor 60 is an imaging element that photoelectrically converts brightness and darkness of light formed on light receiving surface 61 into the amount of charges, reads the charge, and converts the charge into an electric signal. Image sensor 60 is disposed on a side of rear surface 41 of dichroic mirror 40. Specifically, image sensor 60 is disposed on the optical axis direction traveling side of the rest of first laser beam A reflected by dichroic mirror 40 and the rest of second laser beam B transmitted through dichroic mirror 40. That is, image sensor 60 receives the rest of first laser beam A reflected by dichroic mirror 40 and the rest of second laser beam B transmitted through dichroic mirror 40 on light receiving surface 61.

Detection-side condensing lens 70 and aperture 71 are disposed between dichroic mirror 40 and image sensor 60 in the optical axis direction. Detection-side condensing lens 70 is positioned closer to image sensor 60 than aperture 71 in the optical axis direction. Detection-side condensing lens 70 condenses each of first laser beam A and second laser beam B. Detection-side condensing lens 70 irradiates light receiving surface 61 of image sensor 60 with each of condensed first laser beam A and second laser beam B. Detection-side condensing lens 70 may have a chromatic aberration correction function. Aperture 71 blocks an excessive light flux in each of laser beams A and B to reduce a pupil diameter. The optical axis direction of each of laser beams A and B emitted by detection-side condensing lens 70 substantially coincides with the Y direction.

Mirror-side actuator 80 changes an inclination of bend mirror 30. Mirror-side actuator 80 includes, for example, a motor, a piezo element, or the like. The change in the inclination of bend mirror 30 by mirror-side actuator 80 changes an orientation of the optical axis of second laser beam B bent by bend mirror 30. Accordingly, a condensing position of second laser beam B to be described later changes.

First lens-side actuator 81 moves first collimator lens 20 in the optical axis direction (Z direction). First lens-side actuator 81 is, for example, a motor, a piezo element, or the like. Second lens-side actuator 82 moves second collimator lens 21 in the optical axis direction (Z direction). Second lens-side actuator 82 is, for example, a motor, a piezo element, or the like. The movement of each of collimator lenses 20 and 21 in the optical axis direction (Z direction) by each of lens-side actuators 81 and 82 changes a spot diameter of each of laser beams A and B to be described later.

Note that, when each of collimator lenses 20 and 21 is moved in the optical axis direction (Z direction) by each of lens-side actuators 81 and 82, each of collimator lenses 20 and 21 does not necessarily move straight in the optical axis direction (Z direction), but may slightly move or slightly tilt in the horizontal direction (X direction and Y direction) orthogonal to the optical axis direction.

### (Condensing state of each laser beam)

Laser processing head 10 according to the present exemplary embodiment is characterized in that a condensing state of first laser beam A and second laser beam B on an image plane on workpiece W side can be indirectly detected by image sensor 60. Note that the "condensing state" includes various condensing modes such as a condensing position, a spot diameter, and a blur amount.

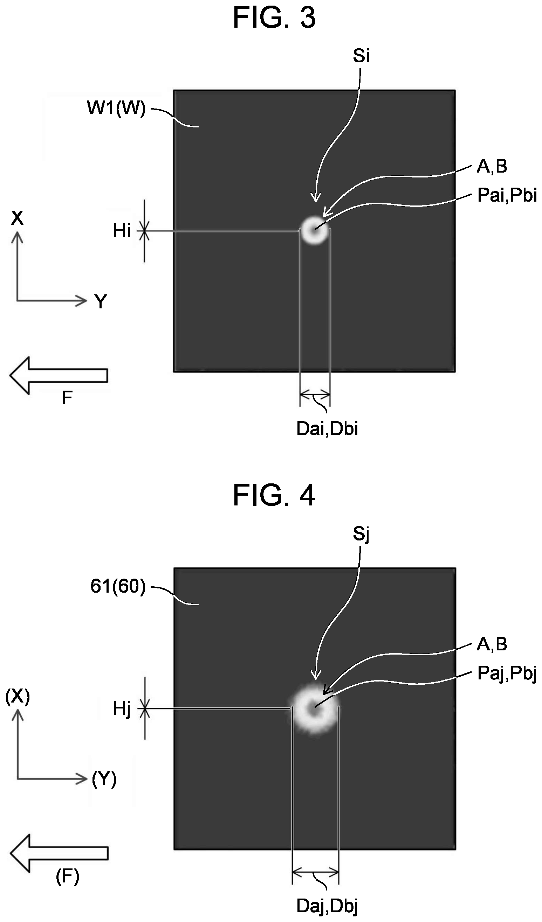

Hereinafter, the condensing state of each of laser beams A and B will be described with reference to Figs. 2 to 4. Fig. 3 illustrates workpiece-side condensing state Si that is a condensing state of first laser beam A and second laser beam B on the image plane on workpiece W side. Fig. 4 illustrates detection-side condensing state Sj that is a condensing state of first laser beam A and second laser beam B on an image plane on image sensor 60 side. The "image plane on workpiece W side" is a plane (X and Y plane) orthogonal to the optical axis direction (Z direction) on workpiece W side, and refers to, for example, front surface W1 of workpiece W. The "image plane on image sensor 60 side" is a plane orthogonal to the optical axis direction on image sensor 60 side, and refers to, for example, light receiving surface 61 of image sensor 60. Color shading in Figs. 3 and 4 indicates an energy amount of each of laser beams A and B, and is not related to color (wavelength) of each of laser beams A and B.

First, workpiece-side condensing state Si will be described with reference to Figs. 2 and 3. Actual workpiece-side condensing state Si can be confirmed, for example, by disposing an image sensor instead of workpiece W and directly detecting each of laser beams A and B by the image sensor.

Workpiece-side condensing state Si includes workpiece-side first condensing position Pai that is a condensing position of first laser beam A on front surface W1 of workpiece W (image plane on workpiece W side), and workpiece-side second condensing position Pbi that is a condensing position of second laser beam B on front surface W1 of workpiece W (image plane on workpiece W side).

In addition, workpiece-side condensing state Si includes workpiece-side first spot diameter Dai that is a spot diameter of first laser beam A on front surface W1 of workpiece W (image plane on workpiece W side) and workpiece-side second spot diameter Dbi that is a spot diameter of second laser beam B on front surface W1 of workpiece W (image plane on workpiece W side). Note that, in the present exemplary embodiment, the "spot diameter" means a diameter of a laser beam on an arbitrary image plane (for example, front surface W1 of workpiece W or light receiving surface 61 of image sensor 60), and is not necessarily limited to a diameter at a converging spot of the laser beam.

Next, detection-side condensing state Sj will be described with reference to Figs. 2 and 4. Detection-side condensing state Sj is detected by image sensor 60.

Detection-side condensing state Sj includes detection-side first condensing position Paj that is a condensing position of first laser beam A on light receiving surface 61 of image sensor 60 (image plane on image sensor 60 side), and detection-side second condensing position Pbj that is a condensing position of second laser beam B on light receiving surface 61 of image sensor 60 (image plane on image sensor 60 side).

In addition, detection-side condensing state Sj includes detection-side first spot diameter Daj that is a spot diameter of first laser beam A on light receiving surface 61 of image sensor 60 (image plane on image sensor 60 side) and detection-side second spot diameter Dbj that is a spot diameter of second laser beam B on light receiving surface 61 of image sensor 60 (image plane on image sensor 60 side).

As illustrated in Figs. 2 to 4, detection-side condensing state Sj corresponds to workpiece-side condensing state Si. Specifically, detection-side first condensing position Paj corresponds to workpiece-side first condensing position Pai. Detection-side second condensing position Pbj corresponds to workpiece-side second condensing position Pbi. Detection-side first spot diameter Daj corresponds to workpiece-side first spot diameter Dai. Detection-side second spot diameter Dbj corresponds to workpiece-side second spot diameter Dbi. For example, when workpiece-side first condensing position Pai moves, detection-side first condensing position Paj also moves correspondingly. When workpiece-side second condensing position Pbi moves, detection-side second condensing position Pbj also moves correspondingly. When workpiece-side first spot diameter Dai expands and contracts, detection-side first spot diameter Daj also expands and contracts correspondingly. When workpiece-side second spot diameter Dbi expands and contracts, detection-side second spot diameter Dbj also expands and contracts correspondingly.

Workpiece-side condensing state Si can be indirectly detected in real time (simultaneously) by detecting detection-side condensing state Sj by image sensor 60.

### (Adjustment of condensing state)

Workpiece-side condensing state Si is adjusted by an adjuster (mirror-side actuator 80, first lens-side actuator 81, and second lens-side actuator 82) based on detection-side condensing state Sj.

### (Adjustment of condensing position)

First, a method for adjusting the condensing position of each of laser beams A and B will be described. Figs. 2 to 4 illustrate a case where the condensing position of first laser beam A and the condensing position of second laser beam B coincide with each other. That is, as illustrated in Figs. 2 and 3, workpiece-side first condensing position Pai and workpiece-side second condensing position Pbi coincide with each other in the horizontal directions (X and Y directions). Correspondingly, as illustrated in Figs. 2 and 4, detection-side first condensing position Paj and detection-side second condensing position Pbj coincide with each other.

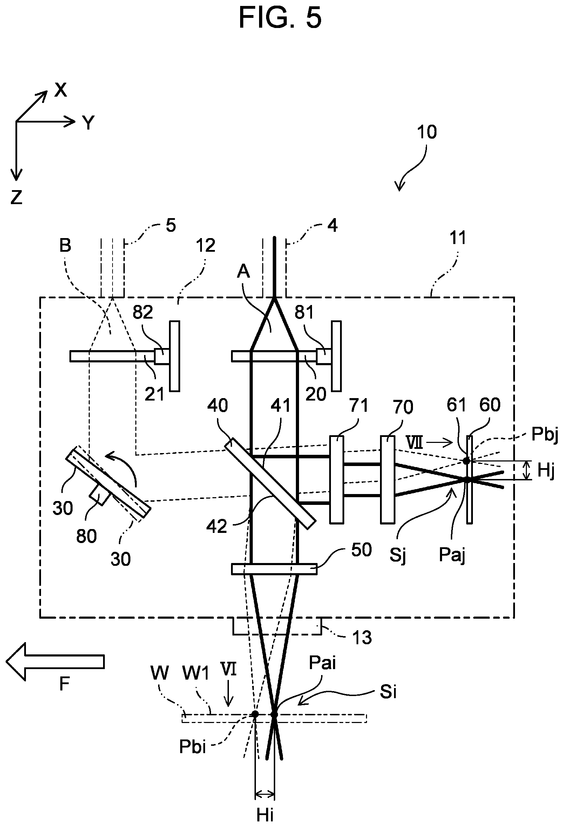

Figs. 5 to 7 illustrate a case where the condensing position of first laser beam A and the condensing position of second laser beam B deviate from each other. That is, workpiece-side first condensing position Pai and workpiece-side second condensing position Pbi deviate from each other in the Y direction of the horizontal directions. Correspondingly, detection-side first condensing position Paj and detection-side second condensing position Pbj deviate from each other.

As illustrated in Figs. 2 and 5, the inclination of bend mirror 30 is changed by mirror-side actuator 80, and thus, workpiece-side second condensing position Pbi and detection-side second condensing position Pbj move to correspond to each other. That is, detection-side second condensing position Pbj also moves by the movement of workpiece-side second condensing position Pbi.

A positional relationship (for example, difference Hi) between workpiece-side first condensing position Pai and workpiece-side second condensing position Pbi is adjusted by changing the inclination of bend mirror 30 by mirror-side actuator 80 based on a positional relationship (for example, difference Hj) between detection-side first condensing position Paj and detection-side second condensing position Pbj.

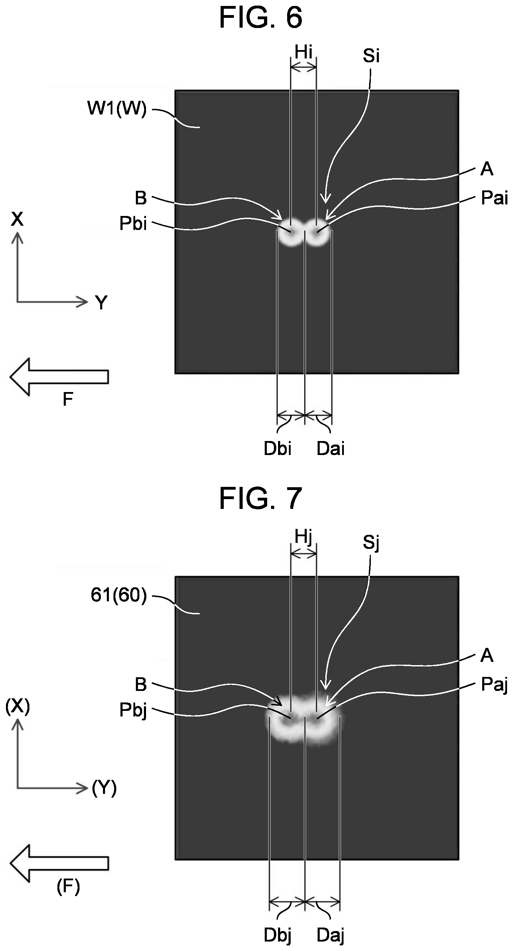

For example, in a case where it is desired to cause workpiece-side second condensing position Pbi to coincide with workpiece-side first condensing position Pai (see Figs. 2 and 3) from a state where workpiece-side second condensing position Pbi does not coincide with workpiece-side first condensing position Pai (see Figs. 5 and 6), feedback is performed to the inclination of bend mirror 30 based on difference Hj between detection-side first condensing position Paj and detection-side second condensing position Pbj (see Figs. 5 and 7). That is, the inclination of bend mirror 30 is changed by mirror-side actuator 80 while difference Hj is observed by image sensor 60, and detection-side second condensing position Pbj is caused to coincide with detection-side first condensing position Paj such that difference Hj becomes zero (see Figs. 2 and 4). Accordingly, workpiece-side second condensing position Pbi is adjusted to coincide with workpiece-side first condensing position Pai (such that difference Hi between workpiece-side first condensing position Pai and workpiece-side second condensing position Pbi becomes zero) (see Figs. 2 and 3).

Similarly, in a case where it is intentionally desired to actively provide difference Hi between workpiece-side first condensing position Pai and workpiece-side second condensing position Pbi (see Figs. 5 and 6) from a state where workpiece-side first condensing position Pai and workpiece-side second condensing position Pbi coincide with each other (see Figs. 2 and 3), feedback is performed to the inclination of bend mirror 30 based on difference Hj between detection-side first condensing position Paj and detection-side second condensing position Pbj. That is, the inclination of bend mirror 30 is changed by mirror-side actuator 80 while difference Hj is observed by image sensor 60, and detection-side second condensing position Pbj is moved with respect to detection-side first condensing position Paj such that difference Hj becomes a predetermined value (see Figs. 5 and 7). Accordingly, difference Hi between workpiece-side first condensing position Pai and workpiece-side second condensing position Pbi is adjusted to a predetermined value (see Figs. 5 and 6).

Further, as illustrated in Figs. 5 and 6, workpiece-side second condensing position Pbi may be adjusted to be positioned on a front side (traveling side) in laser processing direction F (movement direction of laser processing head 10 with respect to workpiece W) with respect to workpiece-side first condensing position Pai.

### (Adjustment of spot diameter)

Next, a method for adjusting the spot diameter of each of laser beams A and B will be described. Figs. 2 to 4 illustrate a case where neither first laser beam A nor second laser beam B is defocused (deviates from the image plane in the optical axis direction at the condensing position). In this case, as illustrated in Figs. 2 and 3, workpiece-side second condensing position Pbi is positioned on front surface W1 of workpiece W in the optical axis direction. Correspondingly, as illustrated in Figs. 2 and 4, detection-side second condensing position Pbi is positioned on light receiving surface 61 of image sensor 60 in the optical axis direction. In this case, as illustrated in Figs. 2 and 3, both workpiece-side first spot diameter Dai and workpiece-side second spot diameter Dbi are small. Correspondingly, as illustrated in Figs. 2 and 4, both detection-side first spot diameter Daj and detection-side second spot diameter Dbj are small.

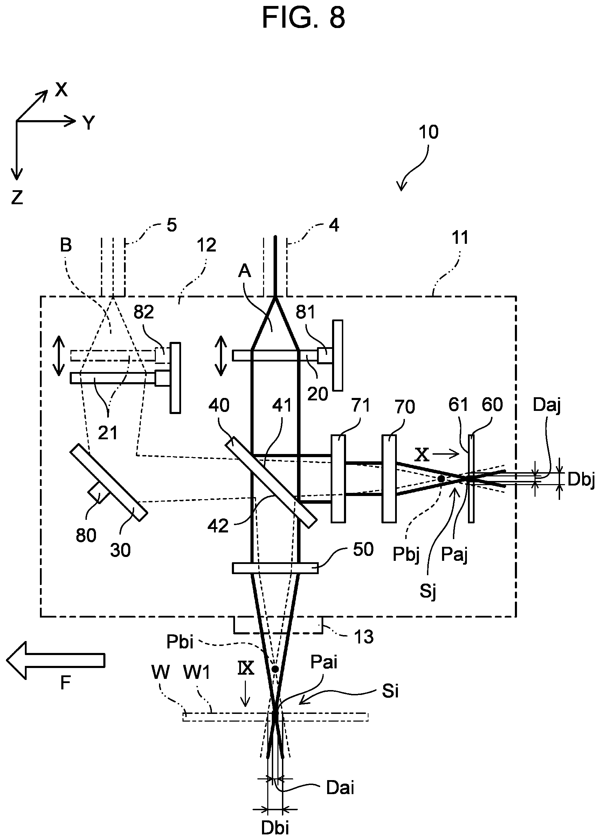

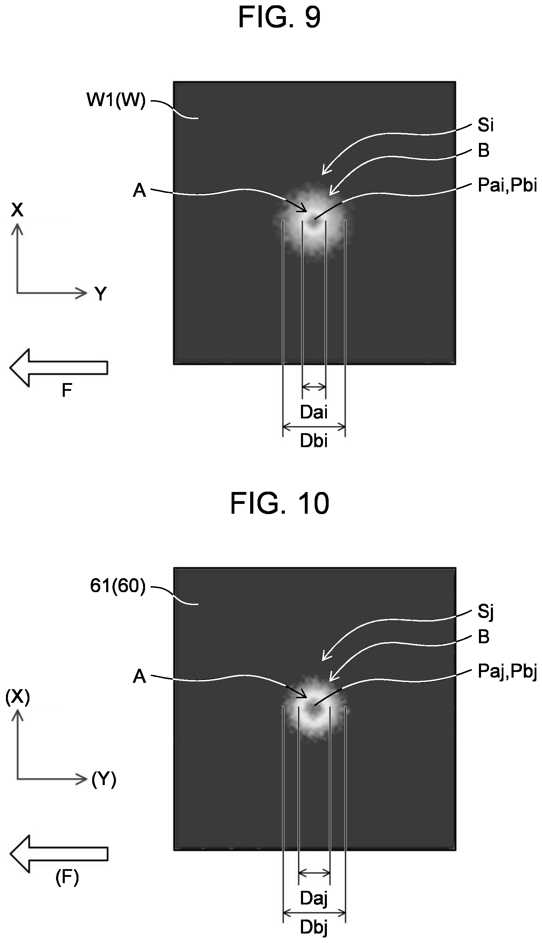

Figs. 8 to 10 illustrate a case where second laser beam B is defocused. In this case, as illustrated in Figs. 8 and 9, workpiece-side second condensing position Pbi deviates from front surface W1 of workpiece W in the optical axis direction and is close to workpiece-side condensing lens 50. Correspondingly, as illustrated in Figs. 8 and 10, detection-side second condensing position Pbi deviates from light receiving surface 61 of image sensor 60 in the optical axis direction and is close to detection-side condensing lens 70. As illustrated in Figs. 8 and 9, workpiece-side second spot diameter Dbi increases. Correspondingly, as illustrated in Figs. 8 and 10, detection-side second spot diameter Dbj increases.

As illustrated in Figs. 2 and 8, second collimator lens 21 is moved in the optical axis direction (Z direction) by second lens-side actuator 82, and thus, workpiece-side second spot diameter Dbi and detection-side second spot diameter Dbj expand and contract to correspond to each other. That is, when workpiece-side second spot diameter Dbi expands, detection-side second spot diameter Dbj also expands. When workpiece-side second spot diameter Dbi contracts, detection-side second spot diameter Dbj also contracts.

Workpiece-side second spot diameter Pai is adjusted by moving second collimator lens 21 in the optical axis direction (Z direction) by second lens-side actuator 82 based on detection-side second spot diameter Dbj.

For example, in a case where it is desired to deviate from a state where second laser beam B is defocused (see Figs. 8 to 10) to a state where second laser beam B is not defocused (see Figs. 2 to 4), feedback is performed to a position of second collimator lens 21 in the optical axis direction (Z direction) based on detection-side second spot diameter Dbj. That is, second collimator lens 21 is moved in the optical axis direction (Z direction) by second lens-side actuator 82 (see Figs. 2 and 8) while detection-side second spot diameter Dbj is observed by image sensor 60 (see Figs. 8 and 10), and detection-side second spot diameter Dbj is reduced (see Figs. 2 and 4). Accordingly, a defocus state of second laser beam B is corrected, and workpiece-side second spot diameter Dbi decreases (see Figs. 2 and 3).

Although not illustrated, first collimator lens 20 is moved in the optical axis direction (Z direction) by first lens-side actuator 81, and thus, workpiece-side first spot diameter Dai and detection-side first spot diameter Daj expand and contract to correspond to each other. Workpiece-side first spot diameter Dai is adjusted by moving first collimator lens 20 in the optical axis direction (Z direction) by first lens-side actuator 81 based on detection-side first spot diameter Daj.

### (Effects of present exemplary embodiment)

According to the present exemplary embodiment, image sensor 60 receives the rest of first laser beam A reflected by dichroic mirror 40 and the rest of second laser beam B transmitted through dichroic mirror 40. Accordingly, detection-side condensing state Sj corresponding to workpiece-side condensing state Si can be detected by image sensor 60. That is, image sensor 60 can indirectly detect workpiece-side condensing state Si in real time by detecting detection-side condensing state Sj.

Workpiece-side condensing state Si can be adjusted in real time by the adjuster (mirror-side actuator 80, first lens-side actuator 81, and second lens-side actuator 82) based on detection-side condensing state Sj.

As described above, in the hybrid laser processing, condensing state Si of each of laser beams A and B with which workpiece W is irradiated can be detected and adjusted in real time.

Specifically, image sensor 60 can indirectly detect workpiece-side first condensing position Pai and workpiece-side second condensing position Pbi in real time by detecting detection-side first condensing position Paj and detection-side second condensing position Pbj.

Workpiece-side second condensing position Pbi can be moved by changing the inclination of bend mirror 30 by mirror-side actuator 80 based on detection-side second condensing position Pbj. Accordingly, the positional relationship (difference Hi) between workpiece-side first condensing position Pai and workpiece-side second condensing position Pbi can be adjusted in real time based on the positional relationship (difference Hj) between detection-side first condensing position Paj and detection-side second condensing position Pbj.

For example, the positional deviation (Hi > 0, see Figs. 5 and 6) between workpiece-side first condensing position Pai and workpiece-side second condensing position Pbi can be corrected such that workpiece-side first condensing position Pai and workpiece-side second condensing position Pbi coincide with each other (Hi = 0, see Fig. 3). Thus, first laser beam A and second laser beam B can be aligned on the identical optical axis.

In particular, when each of collimator lenses 20 and 21 is moved in the optical axis direction (Z direction), each of collimator lenses 20 and 21 may unintentionally move or incline in the horizontal directions (X direction and Y direction) orthogonal to the optical axis direction. In this case, workpiece-side first condensing position Pai and workpiece-side second condensing position Pbi may unintentionally deviate from each other. Laser processing head 10 according to the present exemplary embodiment is very effective in correcting such unintended positional deviation.

In addition, as illustrated in Figs. 5 and 6, difference Hi (> 0) between workpiece-side first condensing position Pai and workpiece-side second condensing position Pbi is intentionally provided, and workpiece-side second condensing position Pbi can be intentionally positioned on a front side in laser processing direction F with respect to workpiece-side first condensing position Pai. Thus, in a case where workpiece W is, for example, copper, workpiece W can be irradiated with second laser beam B including blue light having a high absorption rate to copper earlier than first laser beam A including near-infrared light. That is, preheating (preliminary heating) with blue light can be performed.

Image sensor 60 can indirectly detect workpiece-side first spot diameter Dai in real time by detecting detection-side first spot diameter Daj. Workpiece-side first spot diameter Dai can be expanded and contracted by moving first collimator lens 20 in the optical axis direction (Z direction) by first lens-side actuator 81 based on detection-side first spot diameter Daj. Thus, workpiece-side first spot diameter Dai can be adjusted in real time based on detection-side first spot diameter Daj. The defocus of first laser beam A can be corrected by adjusting workpiece-side first spot diameter Dai to decrease.

Similarly, image sensor 60 can indirectly detect workpiece-side second spot diameter Dbi in real time by detecting detection-side second spot diameter Dbj. Workpiece-side second spot diameter Dbi can be expanded and contracted by moving second collimator lens 21 in the optical axis direction (Z direction) by second lens-side actuator 82 based on detection-side second spot diameter Dbj. Accordingly, workpiece-side second spot diameter Dbi can be adjusted in real time based on detection-side second spot diameter Dbj. The defocus of second laser beam B can be corrected by adjusting workpiece-side second spot diameter Dbi to decrease.

### (Other exemplary embodiments)

Although the present invention has been described with reference to preferable exemplary embodiments, the present disclosure is not limited to the above description, and various modifications can be surely made.

In a case where second laser beam B is defocused, workpiece-side second condensing position Pbi deviates from front surface W1 of workpiece W in the optical axis direction to be close to workpiece-side condensing lens 50 (see Figs. 8 to 10), but the present disclosure is not limited thereto. Workpiece-side second condensing position Pbi may deviate from front surface W1 of workpiece W in the optical axis direction to be close to a side away from workpiece-side condensing lens 50 (inner side of workpiece W). In this case, detection-side second condensing position Pbj deviates from light receiving surface 61 of image sensor 60 in the optical axis direction, and is closer to a side away from detection-side condensing lens 70 (inner side of image sensor 60). The same applies to first laser beam A.

Workpiece-side condensing state Si and detection-side condensing state Sj may include blur amounts of laser beams A and B.

An actuator that adjusts the inclination of dichroic mirror 40 may be included as the adjuster.

Workpiece-side condensing state Si does not need to include the condensing state of both first laser beam A and second laser beam B on the image plane on workpiece W side, and may include the condensing state (for example, spot diameter) of at least one of first laser beam A and second laser beam B. Correspondingly, detection-side condensing state Sj does not need to include the condensing state of both first laser beam A and second laser beam B on the image plane on image sensor 60 side, and may include the condensing state (for example, the spot diameter) of at least one of first laser beam A and second laser beam B.

In the present exemplary embodiment, first laser beam A is near-infrared light, and second laser beam B is blue light, but the present disclosure is not limited thereto. Second laser beam B may be green light (wavelength: about 450 nm to 550 nm) instead of blue light from the viewpoint of absorption rate to copper. In addition, first laser beam A may be blue light or green light, and second laser beam B may be near-infrared light. In addition, light other than blue light or green light and near-infrared light may be used. First laser beam A and second laser beam B have the same wavelength.

The following Examples describe exemplary embodiments.

Example A provides a laser processing head that combines a first laser beam and a second laser beam different from each other to irradiate a workpiece with the combined laser beams, the laser processing head comprising:
a bend mirror that bends the second laser beam in a direction intersecting the first laser beam;
a dichroic mirror that transmits most of the first laser beam toward the workpiece and reflects most of the second laser beam toward the workpiece;
a workpiece-side condensing lens that condenses each of the first laser beam and the second laser beam to irradiate the workpiece with the condensed laser beams between the dichroic mirror and the workpiece;
a photodetector that receives each of a rest of the first laser beam reflected by the dichroic mirror and a rest of the second laser beam transmitted through the dichroic mirror;
a detection-side condensing lens that condenses each of the first laser beam and the second laser beam to irradiate the photodetector with the condensed laser beam between the dichroic mirror and the photodetector; and
an adjuster that adjusts a workpiece-side condensing state that is a condensing state of at least one of the first laser beam and the second laser beam on an image plane on a workpiece side,
wherein
the photodetector detects a detection-side condensing state corresponding to the workpiece-side condensing state, the detection-side condensing state being a condensing state of at least one of the first laser beam and the second laser beam on an image plane on a photodetector side, and
the workpiece-side condensing state is adjusted by the adjuster based on the detection-side condensing state.

Example B provides a laser processing head as described in Example A, wherein
the workpiece-side condensing state includes a workpiece-side first condensing position that is a condensing position of the first laser beam on the image plane on the workpiece side, and a workpiece-side second condensing position that is a condensing position of the second laser beam on the image plane on the workpiece side,
the detection-side condensing state includes a detection-side first condensing position corresponding to the workpiece-side first condensing position, the detection-side first condensing position being a condensing position of the first laser beam on the image plane on the photodetector side, and a detection-side second condensing position corresponding to the workpiece-side second condensing position, the detection-side second condensing position being a condensing position of the second laser beam on the image plane on the photodetector side,
the adjuster includes a mirror-side actuator that moves the workpiece-side second condensing position and the detection-side second condensing position to correspond to each other by changing an inclination of the bend mirror, and
a positional relationship between the workpiece-side first condensing position and the workpiece-side second condensing position is adjusted by the mirror-side actuator based on a positional relationship between the detection-side first condensing position and the detection-side second condensing position.

Example C provides a laser processing head as described in Example B, wherein the workpiece-side second condensing position is adjusted to coincide with the workpiece-side first condensing position.

Example D provides a laser processing head as described in Example B, wherein
the first laser beam is near-infrared light,
the second laser beam is blue light or green light, and
the workpiece-side second condensing position is adjusted to be positioned on a front side in a laser processing direction with respect to the workpiece-side first condensing position.

Example E provides a laser processing head as described in any one of Examples A-D, further comprising a first collimator lens that collimates the first laser beam,
wherein
the workpiece-side condensing state includes a workpiece-side first spot diameter that is a spot diameter of the first laser beam on the image plane on the workpiece side,
the detection-side condensing state includes a detection-side first spot diameter corresponding to the workpiece-side first spot diameter, the detection-side first spot diameter being a spot diameter of the first laser beam on the image plane on the photodetector side,
the adjuster includes a first lens-side actuator that expands or contracts, the workpiece-side first spot diameter and the detection-side first spot diameter corresponding to each other by moving the first collimator lens in an optical axis direction, and
the workpiece-side first spot diameter is adjusted by the first lens-side actuator based on the detection-side first spot diameter.

Example F provides a laser processing head as described in any one of Examples A-E, further comprising a second collimator lens that collimates the second laser beam,
wherein
the workpiece-side condensing state includes a workpiece-side second spot diameter that is a spot diameter of the second laser beam on the image plane on the workpiece side,
the detection-side condensing state includes a detection-side second spot diameter corresponding to the workpiece-side second spot diameter, the detection-side second spot diameter being a spot diameter of the second laser beam on the image plane on the photodetector side,
the adjuster includes a second lens-side actuator that expands and contracts, the workpiece-side second spot diameter and the detection-side second spot diameter corresponding to each other by moving the second collimator lens in an optical axis direction, and
the workpiece-side second spot diameter is adjusted by the second lens-side actuator based on the detection-side second spot diameter.

Example G provides a laser processing system comprising:
the laser processing head as described in any one of Examples A-F;
a first laser oscillator that emits the first laser beam;
a second laser oscillator that emits the second laser beam;
a first optical fiber that transfers the first laser beam from the first laser oscillator to the laser processing head; and
a second optical fiber that transfers the second laser beam from the second laser oscillator to the laser processing head.

### INDUSTRIAL APPLICABILITY

Since the present disclosure can be applied to a laser processing head and a laser processing system, the present disclosure is extremely useful and has high industrial applicability.

### REFERENCE MARKS IN THE DRAWINGS

- F: laser processing direction
- W: workpiece
- W1: front surface (image plane)
- Si: workpiece-side condensing state
- Sj: detection-side condensing state
- A: first laser beam
- Pai: workpiece-side first condensing position
- Dai: workpiece-side first spot diameter
- Paj: detection-side first condensing position
- Daj: detection-side first spot diameter
- B: second laser beam
- Pbi: workpiece-side second condensing position
- Dbi: workpiece-side second spot diameter
- Pbj: detection-side second condensing position
- Dbj: detection-side second spot diameter
- Hi: difference (positional relationship)
- Hj: difference (positional relationship)
- 1: laser processing system
- 2: first laser oscillator
- 3: second laser oscillator
- 4: first optical fiber
- 5: second optical fiber
- 10: laser processing head
- 20: first collimator lens
- 21: second collimator lens
- 30: bend mirror
- 40: dichroic mirror
- 50: workpiece-side condensing lens
- 60: image sensor (photodetector)
- 61: light receiving surface
- 70: detection-side condensing lens
- 80: mirror-side actuator (adjuster)
- 81: first lens-side actuator (adjuster)
- 82: second lens-side actuator (adjuster)

## Claims

1. A laser processing head (10) that combines a first laser beam (A) and a second laser beam (B) different from each other to irradiate a workpiece (W) with combined laser beams, the laser processing head (10) comprising:
(a) a dichroic mirror (40) configured to
direct a main portion of the first laser beam (A) and a main portion of the second laser beam (B) toward the workpiece (W), and
direct a rest portion of the first laser beam (A) and a rest portion of the second laser beam (B) toward a photodetector (60);
(b) a workpiece-side condensing lens (50) configured to condense each of the first laser beam (A) and the second laser beam (B) to irradiate the workpiece (W) with the condensed laser beams;
(c) the photodetector (60) comprising an image sensor configured to receive the rest portion of the first laser beam (A) and the rest portion of the second laser beam (B) and to output image data representing respective spots on a light receiving surface (61);
(d) a detection-side optical system disposed between the dichroic mirror (40) and the photodetector (60), the detection-side optical system comprising an aperture (71) configured to block an excessive light flux to reduce a pupil diameter;
(e) an adjuster configured to adjust a workpiece-side condensing state that includes at least one of a workpiece-side first spot diameter (Dai) and a workpiece-side second spot diameter (Dbi);
(f) a control device (7) configured to
(f1) determine, from the image data, at least one of a detection-side first spot diameter (Daj) corresponding to the workpiece-side first spot diameter (Dai) and a detection-side second spot diameter (Dbj) corresponding to the workpiece-side second spot diameter (Dbi); and
(f2) during laser processing, repeatedly control operation of the adjuster based on the at least one determined detection-side spot diameter to adjust the at least one of the workpiece-side first spot diameter (Dai) and the workpiece-side second spot diameter (Dbi).

2. The laser processing head (10) according to claim 1, further comprising a bend mirror (30) configured to bend the second laser beam (B) in a direction intersecting the first laser beam (A).

3. The laser processing head (10) according to claim 1 or 2, wherein the dichroic mirror (40) is configured to transmit 95% to 99.9% of the first laser beam (A) in terms of energy toward the workpiece (W) and to reflect 95% to 99.9% of the second laser beam (B) in terms of energy toward the workpiece (W).

4. The laser processing head (10) according to any one of claims 1 to 3, wherein the detection-side optical system further comprises a detection-side condensing lens (70).

5. The laser processing head (10) according to claim 4, wherein the detection-side condensing lens (70) is positioned closer to the photodetector (60) than the aperture (71).

6. The laser processing head (10) according to any one of claims 1 to 5, wherein the adjuster comprises at least one lens-side actuator configured to move a collimator lens in an optical axis direction to expand or contract the at least one of the workpiece-side first spot diameter (Dai) and the workpiece-side second spot diameter (Dbi).

7. The laser processing head (10) according to claim 6, wherein the at least one lens-side actuator comprises a first lens-side actuator (81) configured to move a first collimator lens (20) in the optical axis direction to adjust the workpiece-side first spot diameter (Dai).

8. The laser processing head (10) according to claim 6 or 7, wherein the at least one lens-side actuator comprises a second lens-side actuator (82) configured to move a second collimator lens (21) in the optical axis direction to adjust the workpiece-side second spot diameter (Dbi).

9. The laser processing head (10) according to any one of claims 1 to 8, wherein the control device (7) is configured to detect a defocus condition based on an increase of the detection-side spot diameter and to correct the defocus by reducing the detected spot diameter.

10. The laser processing head (10) according to any one of claims 1 to 9, wherein the first laser beam (A) is near-infrared light and the second laser beam (B) is blue light or green light.
